Europäisches Patentamt

European Patent Office

Office européen des brevets

(11) Publication number: **0 132 312**
A2

# EUROPEAN PATENT APPLICATION

(21) Application number: 84304293.8

(22) Date of filing: 25.06.84

(51) Int. Cl.⁴: **B 23 Q 7/00**, B 23 Q 7/14, B 62 D 65/00

(30) Priority: 23.06.83 GB 8317100
25.04.84 GB 8410538

(43) Date of publication of application: 30.01.85
Bulletin 85/5

(84) Designated Contracting States: AT BE CH DE FR IT LI LU NL SE

(71) Applicant: **V.S. ENGINEERING LIMITED, Midland Road, Luton Bedfordshire (GB)**

(72) Inventor: **Low, Robert Graham Malcolm, 6 Minton Close, Blakelands Milton Keynes (GB)**

(74) Representative: **Horton, Andrew Robert Grant et al, BOULT, WADE & TENNANT 27 Furnival Street, London, EC4A 1PQ (GB)**

(54) Method and apparatus for use in production lines.

(57) The invention relates to apparatus for operating on at least one article of a plurality of articles which are being continuously transported in succession along a path.

A car shell (1) moves along a conveyor belt (2) in the direction from right to left as shown in the Figure. When the car shell moves adjacent the apparatus 4, slide legs 8 are urged to move upwards by, for example, pistons. Consequently, the car body is engaged by holding means (30) provided at the top of slide legs and lifted clear of jig posts (3) which support the car shell on the conveyor belt.

Thereafter, the rectangular support structure (10) which supports the slide legs (8) is moved in a leftward direction as shown in the Figure to move the car shell to the position indicated by a dotted line. At this position, means are arranged to operate on the car body shell, for example a glazing robot. After completion of the operation the support structure (10) can be lowered so that the car body shell again comes into contact with the conveyor belt (2).

By arranging the horizontal movement of the car shell to advance the shell relative to its original position on the track, it is possible for an operation to be carried out on the shell and thereafter to replace the shell onto the original, now moved, location on the track. In this way, it is unnecessary to have robots operating on the shell moving at the same speed as the track.

"METHOD AND APPARATUS FOR USE IN PRODUCTION LINES"

The present invention relates to a method and apparatus for use in production lines.

In known production line systems, articles are transported along the line by a conveyor travelling at a constant speed of, for example, 5 cm per second. The articles are retained at particular locations on the conveyor either by gravity or by being attached thereto by mechanical locations. Any operation to be carried out on the articles requiring the use of, for example, an industrial robot or tool, necessitates the robot or tool to move along the line as it operates on an article.

The present invention provides a method of operating on at least one article of a plurality of articles which are being continuously transported in succession along a path, the method comprising the steps of removing at least one article from a respective location on the path, performing an operation on the at least one article and returning the at least one article to a respective vacant location on the path.

The present invention further provides apparatus for operating on at least one article of a plurality of articles which are being continuously transported in succession along a path, comprising means adapted to remove at least one article from a respective location on the path, means for moving the at least one article to a position at which the at least one article can be operated on, and means adapted to return the at least one article from the said position to a respective vacant location on the path.

The examples of the present invention will now be described with reference to the accompanying drawings, in which :-

Figure 1 illustrates a side view of an apparatus embodying the invention.

Figure 2 illustrates a view along arrow A shown in Figure 1.

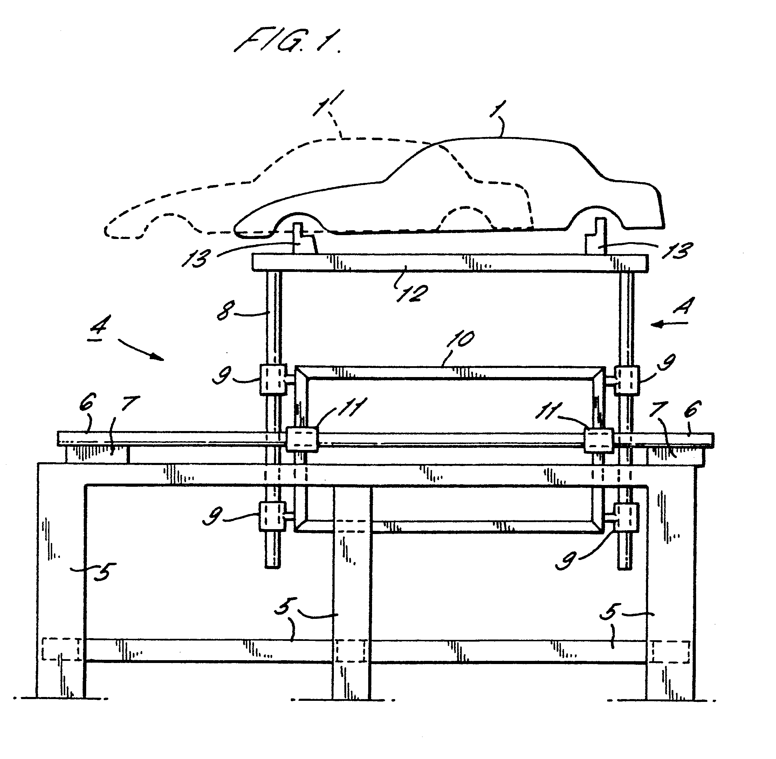

Referring to the drawings, a component 1, for example a car shell, moves along an endless track or conveyor belt 2. The track includes jig posts 3 for supporting the car shell. As the track 2 moves along in the direction from right to left shown in Figure 1, the shell arrives adjacent apparatus designated 4.

The apparatus 4 comprises a static structure 5

- 3 -       0132312

having box girder legs and cross beams.  The structure 5 supports a horizontal slide 6 on supports 7.

A lifting structure comprises four vertical slide legs 8 each received in two sockets 9 connected to a rectangular support structure 10.  Further sockets 11 are connected to the support structure 10, the sockets 11 being arranged to receive the horizontal slide 6.

In use, the conveying track 2 moves along at a continuous rate.  At the position adjacent the support structure 10 raising means, for example pistons (not shown) are activated to cause slide legs 8 to rise up, being guided by the sockets 9.  In this way a support 12 connected at the top of the slide legs and having holding means 13 provided thereon, engages the car body shell 1 and raises it up to a position so that the car shell clears the jig posts 3.      Thus, the car shell 1 is now clear of the track 2.

Thereafter, drive means, for example a rack and pinion arrangement (not shown) is activated to shift the support structure 10 in a leftward direction in Figure 1. The structure is thereby guided in this direction by the sockets 11 sliding on the horizontal slide means 6 until the car body shell obtains the position shown by the dotted line.  In this position, means are arranged to operate on the car body shell, for example a glazing

- 4 -                              0132312

robot or welding robot. After the completion of the robot operation the support structure 10 can be lowered so that the car body shell again comes into contact with the track 2. By arranging the horizontal movement of the car shell to advance the shell relative to its original position on the track it is possible for an operation to be carried out on the shell and thereafter to replace the shell onto the original, now moved, location on the track 2. In this way, it is unnecessary to have robots operating on the shell moving at the same speed as the track 2.

After support structure 10 has been lowered to put the shell 1 back on track 2, the horizontal movement can be reversed to bring the support structure back to its position shown in Figure 1. The limits on the movement, and the activation of movement, of the support structure 10 can be arranged either mechanically or electrically, for example light sensors can be employed to detect position of the shell 1. It will be apparent that the holding means 13 can further include means for altering the position of the car shell 1 relative to the support 12.

Therefore, components which are being continuously transported in succession along track 2 are removed from the conveyor, moved in advance of the track 2, held stationery so as to enable an industrial robot or other machine to carry out operations thereon while they are at rest, and subsequently replaced on the track 2 onto their original position. Preferably, a component is lifted clear of its location on the track 2 and then accelerated forwardly along the track 2 until the component almost contacts the component in the next forward location on the track. The component is then held stationery at a particular position and work is carried out on the components by means of an industrial robot or tool. After the required work has been completed, the component is returned to its original location on the track, although it will be apparent that the component can be replaced simply to a vacant location on the track.

The duration of the work cycle (ie. the time lapse between removal of the component from the conveyor and completion of the required work) is preferably such that the component is positioned in proximity to its original (now vacant) location on the track as the location passes underneath the component. At that stage, either the component may be lowered onto the conveyor into its original location or the component may be again accelerated forwardly along the conveyor in a second cycle similar to that described above.

As mentioned herein before, the mechanism for lifting, moving and lowering the car body shell 1 can be either electrically, pneumatically or hydraulically controlled. These mechanisms have not been shown for the sake of clarity, the operation of such mechanisms will be apparent to a person skilled in the art. It will be apparent that such mechanisms may act directly on the support structure 10 or via intermittent drive gear or scroll drives. Such drives may be operated directly in response to the operation of the drive for the track or may be independently operated.

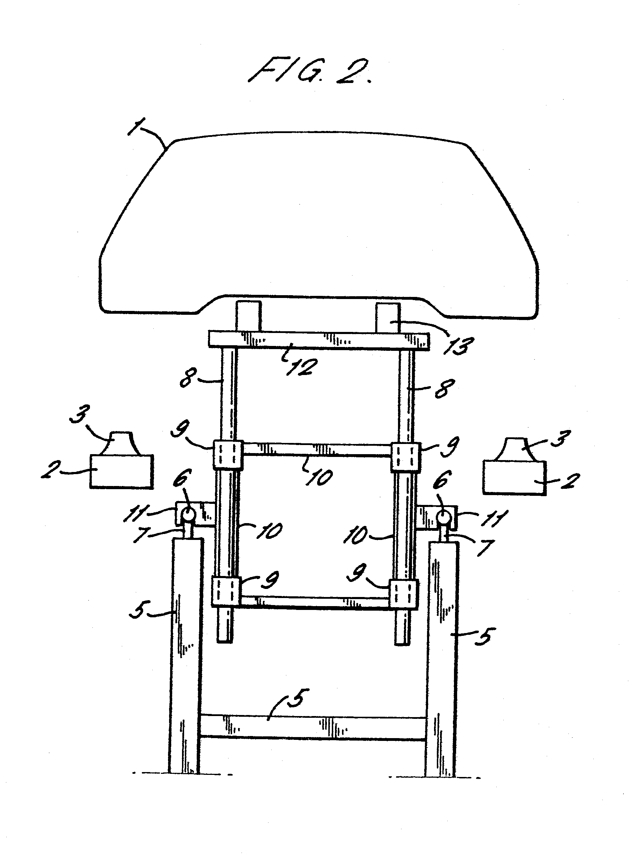

Although the apparatus shown in Figure 2 supports the car body shell 1 between tracks 2 it will be apparent that apparatus could be constructed that would support a component outside the track 2. Although the apparatus illustrated raises the component relative to the track 2 it will be apparent that the component may be engaged by means of location fingers, vacuum cups or gripping jaws which move the component away from contact with the track, which may comprise sideways movement or lowering movement. Similarly, the apparatus shown in Figure 2 is mounted below the component, it will be apparent that the apparatus could be mounted either beside the track 2 or above the track 2. The apparatus may also be adapted to act on a number of components at one time.

CLAIMS:

1.    A method of operating on at least one article of a plurality of articles which are being continuously transported in succession along a path, the method comprising the steps of removing at least one article from a respective location on the path, performing an operation on the at least one article and returning the at least one article to a respective vacant location on the path.

2.    A method according to claim 1 wherein in the step of returning the at least one article, the at least one article is returned to its respective original location on the path.

3.    A method according to claim 1 or claim 2 wherein during the step of performing an operation on the at least one article, the at least one article is held stationary at a third position which is spaced from the path and forward along the path of the first position.

4.    A method according to any one of claims 1 to 3 wherein the at least one article is removed from the respective location by lifting and is returned to a respective vacant location by lowering.

5. Apparatus for operating on at least one article of a plurality of articles which are being continuously transported in succession along a path, comprising means adapted to remove at least one article from a respective location on the path, means for moving the at least one article to a position at which the at least one article can be operated on and means adapted to return the at least one article from the said position to a respective vacant location on the path.

6. Apparatus according to claim 5 wherein the articles are transported by a conveyor and the means adapted to remove comprises means for disengaging the article from the conveyor.

7. Apparatus according to claim 5 or claim 6 wherein the means adapted to return comprises means for re-engaging the article with the conveyor.

8. Apparatus according to any one of claims 5 to 7 wherein the means adapted to return returns the

- 9 -

0132312

at least one article to its respective original location on the path.

9. Apparatus according to any one of claims 5 to 8 further comprising means for holding the at least one article stationary at the said position.

FIG.1.

FIG. 2.